Europäisches Patentamt

(19) European Patent Office

Office européen des brevets

(11) Publication number : **0 435 039 B1**

## (12) EUROPEAN PATENT SPECIFICATION

(45) Date of publication of patent specification :
13.04.94 Bulletin 94/15

(51) Int. Cl.⁵ : **C04B 41/87, C04B 41/89**

(21) Application number : **90123565.5**

(22) Date of filing : **07.12.90**

(54) **Carbon fiber-reinforced composite material.**

(30) Priority : **27.12.89 JP 339557/89**

(43) Date of publication of application :
**03.07.91 Bulletin 91/27**

(45) Publication of the grant of the patent :
**13.04.94 Bulletin 94/15**

(84) Designated Contracting States :
**DE FR GB**

(56) References cited :
EP-A- 310 043
EP-A- 410 781
EP-A- 0 359 614

(73) Proprietor : **SUMITOMO ELECTRIC INDUSTRIES, LTD.**
**5-33, Kitahama 4-chome, Chuo-ku**
**Osaka-shi, Osaka 541 (JP)**

(72) Inventor : **Kawai, Chihiro, c/o Itami Works of Sumitomo**
**Electric Industries, Ltd., 1-1, Koyakita 1-chome**
**Itami-shi, Hyogo-ken (JP)**
Inventor : **Igarashi, Tadashi, c/o Itami Works of Sumitomo**
**Electric Industries, Ltd., 1-1, Koyakita 1-chome**
**Itami-shi, Hyogo-ken (JP)**

(74) Representative : **Hansen, Bernd, Dr. Dipl.-Chem. et al**
**Hoffmann, Eitle & Partner Patent- und Rechtsanwälte, Postfach 81 04 20**
**D-81904 München (DE)**

EP 0 435 039 B1

Jouve, 18, rue Saint-Denis, 75001 PARIS

## Description

The present invention relates to a carbon fiber-reinforced composite material having a low specific gravity and excellent strength, heat resistance, oxidation resistance and thermal shock resistance.

Since a carbon fiber-reinforced carbon composite material comprising a carbon matrix and reinforcing carbon fibers contained therein, namely a C/C composite has excellent heat resistance and strength properties at high temperatures, its application, for example, for an insulating material to be used in a space shuttle is expected and studied.

However, since the C/C composite comprises the carbon matrix, it has insufficient oxidation resistance although it has a low specific gravity and good strength properties.

To impart the oxidation resistance to the C/C composite, it is proposed to apply an oxidation resistant ceramic coating on the surface of C/C composite. However, since a difference between a coefficient of thermal expansion of the C/C composite and that of the ceramic coating is very large, the coating layer tends to be cracked due to thermal stress so that the ceramic coating is peeled off or the strength is greatly decreased.

A carbon fiber-reinforced ceramic composite material comprising a ceramic matrix and reinforcing carbon fibers contained therein, namely a C/ceramic composite has a larger coefficient of thermal expansion than the C/C composite. Therefore, when the ceramic coating is formed on the C/ceramic composite, the coating layer is not cracked due to the thermal stress and the composite has better oxidation resistance. However, the C/ceramic composite has much lower strength than the C/C composite, a large specific gravity and a large coefficient of-thermal conductivity, so that the C/ceramic composite is inferior in weight reduction and heat shielding property to the C/C composite.

EP-0 359 614 Al reveals a coated carbon fiber-reinforced composite material, wherein carbon fibers are included in a matrix which is coated with a layer. The layer is divided into three single layers which comprise an internal layer of silicon carbide, an intermediate layer which may be represented by hafnium carbide or zirconium carbide, and an external layer including an oxide material.

EP-0 310 043 A2 discloses a coated article comprising a substrate body of a silicon nitride- or silicon carbide-based monolithic or composite material; an intermediate layer of an aluminum nitride or aluminum oxynitride material; a first outer layer comprising a continuous layer of alumina having dispersed therein discontinuous discrete particles of zirconia; and a second outer layer comprising a continuous layer of zirconia having dispersed therein discontinuous discrete particles of alumina; and finally an additional outer layer of zirconia; wherein each layer is a graded layer changing in composition from the material over which it is deposited to the material of the layer and further to the material, if any, deposited thereon, so that no clearly defined compositional interfaces exist between the substrate and the layers or between the layers.

EP-0 410 781 Al discloses a carbon material including a coating constituted mainly by carbon on the surface of a carbon/carbon composite; a second coating of a ceramic or both a ceramic and carbon, wherein at least one of the thermal physical properties or mechanical physical properties of carbon in said first coating changes continuously or step-wise.

One object of the present invention is to provide a carbon fiber-reinforced composite material having excellent oxidation resistance, thermal shock resistance and strength properties.

Another object of the present invention is to provide a carbon fiber-reinforced carbon or ceramic composite material having a coating layer of a ceramic.

According to a first aspect of the present invention, there is provided a coated carbon fiber-reinforced composite material comprising a substrate material which comprises a carbon or ceramic matrix and reinforcing carbon fibers and a coating layer which comprises silicon carbide and at least one material selected from the group consisting of titanium carbide, zirconium carbide and hafnium carbide, wherein a part of said coating layer contacting to said substrate consists of at least one material selected from the group consisting of titanium carbide, zirconium carbide and hafnium carbide, a surface part of said coating layer consists of silicon carbide and a composition in an intermediate part between the part contacting to the substrate and the surface part continuously or stepwise changes from at least one material selected from the group consisting of titanium carbide, zirconium carbide and hafnium carbide to silicon carbide.

According to a second aspect of the present invention, there is provided a carbon fiber-reinforced composite material comprising a matrix which comprises carbon and oxidation resistant ceramic and reinforcing carbon fiber contained in said matrix and optionally a coating layer which comprises hafnium carbide, wherein both surface parts of said matrix consists of the oxidation resistant ceramic, a center part of said matrix consists of carbon and a composition in each of intermediate parts between each surface and the center part continuously or stepwise changes from said oxidation resistant ceramic to carbon.

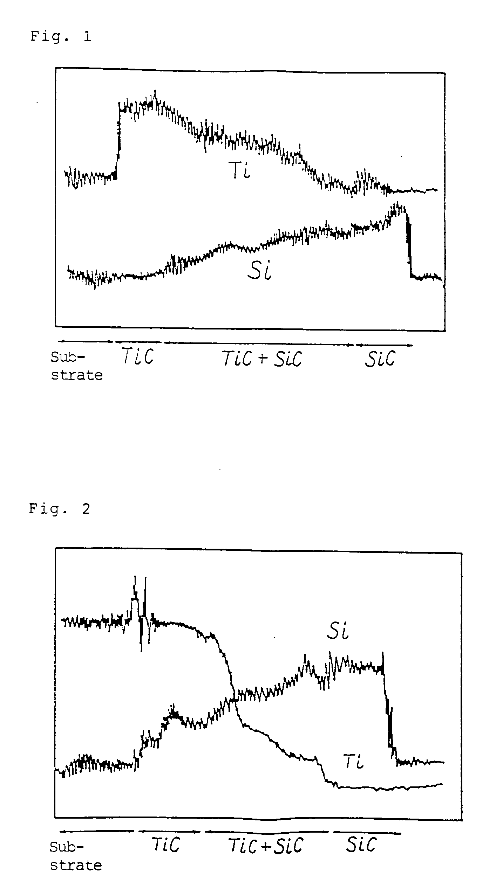

Figs. 1 to 4 are the EPMA charts obtained in Examples 1 and 2.

In the coated carbon fiber-reinforced composite material according to the first aspect of the present invention, the coating layer having the gradient composition can be prepared by a conventional method such as a chemical vapor deposition (CVD) method or a physical vapor deposition (PVD) method. Among them, the CVD method is preferred because of a large film forming rate and easy control of the composition.

In this coated carbon fiber-reinforced composite, the exposed surface of the coating layer consists of silicon carbide (SiC) having good oxidation resistance, and the part of the coating layer contacting to the substrate consists of titanium carbide (TiC), zirconium carbide (ZrC) or hafnium carbide (HfC), and the composition of the intermediate layer continuously changes from titanium carbide, zirconium carbide or hafnium carbide of the part contacting to the substrate to silicon carbide of the surface.

Accordingly, the coefficient of thermal expansion of the coating layer is larger at the part contacting to the substrate than at the surface. For example, titanium carbide has the coefficient of thermal expansion of $7.6 \times 10^{-6}$/K, and silicon carbide has the thermal expansion of $4.6 \times 10^{-6}$/K. In addition, the composition has a gradient and then the coefficient of thermal expansion continuously decreases from the substrate side to the surface in the coating layer. Therefore, not only the surface layer consisting of silicon carbide is not cracked, but also the thermal stress caused by heat cycles can be reduced, so that the oxidation resistance and the thermal shock resistance are simultaneously improved.

Since the coating layer comprises silicone carbide and other ceramics such as titanium carbide and has a gradient composition, compression residual stress is generated in the surface part consisting of silicon carbide when the composite is heated, whereby the thermal cracks do not reach the silicon carbide surface part. This is achieved by forming the part containing to the substrate from other ceramics such as titanium carbide having the larger coefficient of thermal expansion. If the composition in the coating layer has no gradient, the compression stress becomes too large so that the coating layer may be peeled off.

When a thickness of the coating layer is 0.05 mm or larger, the coating layer has an increased heat shielding effect. If the thickness of the coating layer is larger than 5 mm, it takes very long time to form the coating layer. Therefore, the thickness of the coating layer is preferably from 0.05 to 5 mm.

In the carbon fiber-reinforced composite material according to the second aspect of the present invention, since the surfaces of the matrix consists of the oxidation resistant ceramic, the composite material has good oxidation resistance, and since the center part of the matrix consists of carbon, the composite material has good strength properties. In addition, since the composition in each of the intermediate parts between each surface and the center part continuously or stepwise changes from the oxidation resistant ceramic to carbon, the coefficient of thermal expansion continuously or stepwise changes according to the gradient of the composition, so that the generation of thermal stress is suppressed and the thermal shock resistance is improved.

As the oxidation resistant ceramic, carbides, nitrides and carbonitrides of the elements of the IVA group in the Periodic Table (e.g. titanium, zirconium and hafnium), boron and silicon are preferred. Among them, titanium carbide and zirconium nitride are preferred because of good heat shielding effects. For example, the C/TiC composite and the C/ZrN composite have coefficients of thermal coefficient of $4.4 \times 10^{-6}$/K and $4.0 \times 10^{-6}$/K, respectively.

In a preferred embodiment, the carbon fiber-reinforced composite material according to the second aspect of the present invention has a coating layer of hafnium carbide or a coating layer comprising hafnium carbide and silicone carbide and having a gradient composition such that a part of the coating layer contacting to the composite material consists of silicon carbide, a surface of the coating layer consists of hafnium carbide, and a composition in an intermediate part between the part contacting to the substrate and the surface continuously or stepwise changes from silicon carbide to hafnium carbide.

In this preferred embodiment, the carbon fiber-reinforced composite material has a coefficient of thermal expansion of about $4 \times 10^{-6}$/K and close to that of hafnium carbide ($6.3 \times 10^{-6}$/K). In addition, since the composition in each of the intermediate parts between each surface and the center part continuously or stepwise changes from the oxidation resistant ceramic to carbon, the coefficient of thermal expansion continuously or stepwise changes according to the gradient of the composition, so that the generation of thermal stress is suppressed and the generation of cracks in the coating layer can be prevented.

Further, since hafnium carbide in the coating layer or the surface of the coating layer of this preferred embodiment has excellent heat resistance and oxidation resistance, the heat resistance and oxidation resistance of the composite material are further improved.

When the coating layer has the gradient composition of hafnium carbide and silicon carbide, the coefficients of the composite material and the coating layer can be made very close to each other at the interface between them, and the coefficient of thermal expansion in the intermediate layers can be continuously or stepwise changed, so that the thermal shock resistance is further improved.

The composite material having the gradient composition can be produced by a conventional method. Detailed procedures are explained in the following Examples.

The present invention will be explained further in detail by following Examples.

Example 1

On a substrate material consisting of a carbon fiber/carbon composite material containing a two-dimensionally woven carbon fiber fabric (25 x 25 x 5 mm) as a reinforcing material, a coating layer having a gradient composition of TiC and SiC was formed by the CVD method with changing a flow rate of $TiCl_4$ from 0.3 1/min. to 0 1/min. at a changing rate of 0.1 1/hr., a flow rate of $SiCl_4$ from 0 1/min. to 0.6 1/min. at a changing rate of 0.2 1/hr. and a flow rate of $CH_4$ from 0.15 1/min. to 0 4/min. at a changing rate of 0.083 1/hr.

The composition of the deposited coating layer was analyzed along the cross section with the electron probe micro analysis (EPMA) and the result is shown in Fig. 1, from which it is understood that the composition of the coating continuously changed from TiC in the part contacting to the substrate to SiC in the surface.

Then, the produced coated material was heated in the air at 1400°C for one hour and its oxidation resistance was evaluated from the change of weight before and after heating.

The same sample was subjected to the thermal shock resistance test by keeping it in a furnace heated at 1500°C for one minute and introducing it in water and a peeling state of the coating was observed.

For comparison, a two-layer coating wherein a lower layer contacting to the substrate was made of TiC and an upper layer was made of SiC was formed on the substrate material (Sample Nos. 2, 3 and 4) and subjected to the same oxidation resistance test and thermal shock resistance test.

The results are shown in Table 1 together with the thicknesses of the coating.

Table 1

| Sample No. | Coating (μm) | Weight loss $(mg/cm^2)$ | Peeling of coating |
|---|---|---|---|
| 1 | TiC-SiC gradient composition (181) | 0.4 | No |
| 2 | TiC/SiC (12/168) | 0.8 | Yes |
| 3 | TiC/SiC (21/160) | 2.2 | Yes |
| 4 | TiC/SiC (33/145) | 0.9 | Yes |

When the coating has the gradient composition, the oxidation and thermal shock resistances are improved.

Example 2

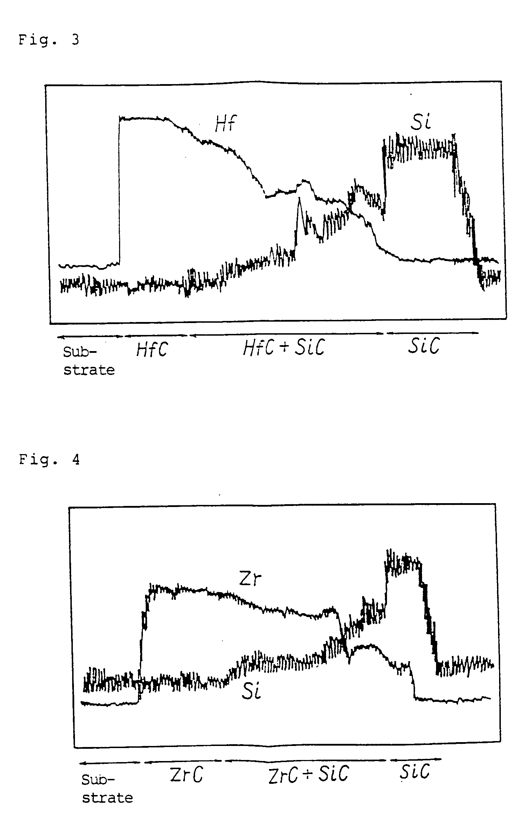

On a substrate material consisting of a carbon fiber/ceramic composite material containing carbon fibers in the TiC matrix, a coating layer having a gradient composition of TiC and SiC, HfC and SiC or ZrC and SiC by the CVD method with changing the flow rates of the raw materials. The composition of each coating layer was analyzed by EPMA. The EPMA charts are shown in Figs. 2, 3 and 3. From these charts, it is understood that the composition continuously changed from TiC, HfC or ZrC in the part contacting to the substrate to SiC in the surface.

Each sample was set on a thermobalance, heated from room temperature to 1300°C at a heating rate of 20°C/min. and kept standing at 1300°C for ten hours. Weight loss due to oxidation after heating was measured. After heating, the hot sample was quenched in liquid nitrogen and a load was measured by a scratch tester till the coating was peeled off.

For comparison, a two-layer coating wherein a lower layer contacting to the substrate was made of TiC, HfC or ZrC and an upper layer was made of SiC was formed on the substrate material (Sample Nos. 8, 9 and 10) and subjected to the same tests.

The results are shown in Table 2 together with the thicknesses of the coating.

Table 2

| Sample No. | Coating (μm) | Weight loss (mg/cm$^2$) | Load for peeling a coating (N) |
|---|---|---|---|
| 5 | TiC-SiC gradient composition (181) | 1.6 | 120 |
| 6 | HfC-SiC gradient composition (98) | 0.8 | 142 |
| 7 | ZrC-SiC gradient composition (102) | 3.2 | 135 |
| 8 | TiC/SiC (22/75) | 10.5 | 50 |
| 9 | HfC/SiC (22/79) | 7.2 | 25 |
| 10 | ZrC/SiC (20/83) | 19.5 | 43 |

Example 3

As matrix components, carbon powder having an average particle size of 2 μm and SiC powder were mixed with a small amount of $Al_2O_3$ powder at a ratio of SiC/(SiC + C) of 0, 20, 40, 60, 80 or 100 % by mole to prepare each powder mixture.

Each powder mixture was kneaded with an acrylamide resin and dispersed in a bath liquid for electrophoresis. In the bath liquid, a cathode made of a woven fabric of PAN type carbon fibers and an anode made of a carbon plate were immersed and a voltage of about 200 V was applied between them for 10 minutes while stirring well. By electrophoresis, particles of the powder mixture were deposited on the carbon fiber fabric to obtain a composite material consisting of the carbon fiber fabric as the reinforcing material and the powder mixture having the above SiC/(SiC + C) ratio.

Then, eleven sheets of the obtained composite materials were laminated according to the composition combination as shown in Table 3 and dried at 100°C for one hour and then at 500°C for 3 hours to remove volatile materials. The dried laminate was sintered at 2000°C under 200 kg/cm$^2$ for 2 hours to obtain a carbon fiber-reinforced composite material having a thickness of 3 mm. The Sample Nos. 12, 13 and 14 are Comparative Samples.

Table 3

| Sample No. | Matrix compositions of composite materials in the order of lamination (% by mole of SiC) |
|---|---|
| 11 | 100-80-60-40-20-0 (= carbon 100 %)-20-40-60-80-100 |
| 12 | 100-100-0-0-0-0-0-0-0-100-100 |
| 13 | SiC 100 % in all of eleven sheets. |
| 14 | Carbon 100 % in all of eleven sheets. |

The oxidation resistance and bending strength of each sample were measured. The oxidation resistance was evaluated from the weight loss after heating the sample (25 x 25 x 3 mm) in the air at 1400°C for one hour without exposing the four side edges to the air. The bending strength was measured on the same sample of the sizes of 40 x 4 x 3 mm by the three-point bending test. The results are shown in Table 4.

Table 4

| Sample No. | Matrix | Weight loss (mg/cm$^2$) | Bending strength (MPa) |
|---|---|---|---|
| 11 | C-SiC gradient composition | 8.6 | 206 |
| 12 | C-SiC non-gradient composition | 8.8 | 185 |
| 13 | All SiC | 8.6 | 100 |
| 14 | All carbon | 250.4 | 210 |

The carbon fiber-reinforced composite material of the present invention has better oxidation resistance and bending strength than the comparative materials.

Example 4

Each sample produced in the same manner as in Example 3 was quickly heated in a furnace kept at 1300°C and kept at 1300°C for 50 minutes. Then, the hot sample was quenched in liquid nitrogen. The above heating and quenching cycle was repeated three times and the bending strength of the sample was measured in the same manner as in Example 3.

After heating and quenching cycles, the bending strength was 211 MPa, 104 MPa, 102 MPa and 212 MPa for the Sample Nos. 11, 12, 13 and 14, respectively. It is seen that the sample No. 12 consisting of non-gradient composition of C-SiC significantly lost the strength due to cracking.

Example 5

In the same manner as in Example 3 but using TiC in place of SiC, the composite material was produced according to the composition combination as shown in Table 5. The Sample Nos. 16 and 17 are Comparative Samples.

Table 5

| Sample No. | Matrix compositions of composite materials in the order of lamination (% by mole of SiC) |
|---|---|
| 15 | 100-80-60-40-20-0 (= carbon 100 %)-20-40-60-80-100 |
| 16 | 100-100-0-0-0-0-0-0-0-100-100 |
| 17 | TiC 100 % in all of eleven sheets. |

Each sample was cut to sizes of 25 x 25 mm (thickness of 3 mm) for the oxidation resistance test and to sizes of 40 x 4 mm (thickness of 3 mm) for bending test. Then, the cut samples were quickly heated to 1000°C in the furnace, kept at 1000°C for 10 hours and quenched in liquid nitrogen. Thereafter, the weight loss and the bending strength were measured. The results are shown in Table 6.

6

Table 6

| Sample No. | Matrix | Weight loss $(mg/cm^2)$ | Bending strength (MPa) |
|---|---|---|---|
| 15 | C-TiC gradient composition | 52.5 | 188 |
| 16 | C-TiC non-gradient composition | 53.0 | 120 |
| 13 | All TiC | 50.5 | 105 |

Example 6

As matrix components, carbon powder having an average particle size of 2 $\mu$m and TiC powder were mixed with a small amount of $Al_2O_3$ powder at a ratio of TiC/(TiC + C) of 0, 20, 40, 60, 80 or 100 % by mole to prepare each powder mixture.

Each powder mixture was kneaded with an acrylamide resin and dispersed in a bath liquid for electrophoresis. In the bath liquid, a cathode made of a woven fabric of PAN type carbon fibers and an anode made of a carbon plate were immersed and a voltage of about 200 V was applied between them for about 10 minutes while stirring well. By electrophoresis, particles of the powder mixture were deposited on the carbon fiber fabric to obtain a composite material consisting of the carbon fiber fabric as the reinforcing material and the powder mixture having the above TiC/(TiC + C) ratio.

Then, eleven sheets of the obtained composite materials were laminated according to the composition combination order of 100-80-60-40-20-0-20-40-60-80-100 (%) and dried at 100°C for one hour and then at 500°C for 3 hours to remove volatile materials. The dried laminate was sintered at 2000°C under 200 kg/cm2 for 2 hours to obtain a carbon fiber-reinforced composite material having a length of 50 mm, a width of 50 mm and a thickness of 3 mm.

On the surface of the substrate, a coating of about 200 $\mu$m in thickness was formed from pure HfC or SiC-HfC having a gradient composition. In the formation of SiC-HfC gradient composition coating, $SiCl_4$, $HfCl_4$ and $CH_4$ were used as reactant gases and hydrogen gas as a carrier gas, and a flow rate of $SiCl_4$ was decreased from 0.75 l/min. to 0 l/min. at a changing rate of 0.25 l/hr., a flow rate of $HfCl_4$ was increased from 0 l/min. to 1.2 l/min. at a changing rate of 0.4 l/hr., and $CH_4$ was supplied at a constant flow rate of 0.3 l/min. The reactants were reacted at 1500°C under pressure of 180 Torr for 3 hours.

For comparison, on a C/C composite or a C/TiC composite, a coating of HfC was formed.

A coefficient of thermal conductivity was measured by a laser flash method and a specific gravity (balk density) was also measured. Then, the sample was heated in the air at 1700°C for 3 hours and a weight loss due to oxidation was measured. Bending strength of the sample was measured before and after heating it at 1500°C for one hour and quenching it in water. The results are shown in Table 7.

Table 7

| | Example 6 | | Comparison | |
|---|---|---|---|---|
| Substrate | C/C-TiC gradient composition | | C/TiC | C/C |
| Coating (thickness, μm) | HfC (185) | SiC-HfC gradient composition (199) | HfC (204) | HfC (210) |
| Coefficient of thermal conducivity (W/mK) | 7.7 | 7.0 | 19.0 | 6.9 |
| Specific gravity (g/cm$^3$) | 2.20 | 2.18 | 3.30 | 1.72 |
| Weight loss (mg/cm$^2$/hr) | 0 | 0 | 0 | 120.5 |
| Bending strength (MPa) Before heating and quenching | 245 | 249 | 120 | 250 |
| After heating and quenching | 240 | 249 | 75 | 233 |

Example 7

In the same manner as in Example 6 but using carbon powder having an average particle size of 3 μm and ZrN powder or SiC powder, carrying out the electrophoresis for 20 minutes to produce each composite sheet, changing the compositions of the substrate matrixes as in Example 6, and sintering the laminated substrate at 2200°C, a C/C-ZrN or C/C-SiC composite was produced. The coating was formed in the same manner as in Example 6.

For comparison, on a C/C composite, a C/ZrN composite or a C/SiC composite, a coating of HfC was formed.

The properties of the produced samples are shown in Table 8.

Table 7

| | Example 7 | | | | Comparison | | |
|---|---|---|---|---|---|---|---|
| Substrate | C/C-ZrN gradient composition | | C/C-SiC gradient composition | | C/ZrN | C/SiC | C/C |
| Coating (thickness, µm) | HfC (220) | SiC-HfC gradient composition (215) | HfC (200) | SiC-HfC gradient composition (208) | HfC (220) | HfC (220) | HfC (221) |
| Coefficient of thermal conductivity (W/mK) | 6.6 | 6.5 | 12.5 | 13.9 | 20.0 | 35.3 | 6.9 |
| Specific gravity (g/cm$^3$) | 2.15 | 2.17 | 1.89 | 1.89 | 3.08 | 2.52 | 1.72 |
| Weight loss (mg/cm$^2$/hr) | 0 | 0 | 1.55 | 0 | 0 | 2.05 | 99.4 |
| Bending strength (MPa) Before heating and quenching | 229 | 250 | 201 | 230 | 109 | 123 | 230 |
| After heating and quenching | 220 | 250 | 195 | 222 | 75 | 80 | 230 |

While the comparative sample comprising the C/C composite as the substrate had poor oxidation resistance, and the comparative samples comprising the C/TiC, C/ZrN and C/SiC composites as the substrates had large specific gravities and poor thermal insulation and bending strength, the samples of the present invention comprising the C/C-ZrN and C/C-SiC composites having the gradient composition as the substrates had the small gravities and good thermal insulation, large strength and improved oxidation resistance and thermal shock resistance. In addition, the coating having the gradient composition further improved the properties.

## Claims

1. A coated carbon fiber-reinforced composite material comprising a substrate material which comprises a carbon or ceramic matrix and reinforcing carbon fibers and a coating layer which comprises silicon carbide and at least one material selected from the group consisting of titanium carbide, zirconium carbide and hafnium carbide, wherein a part of said coating layer contacting to said substrate consists of at least one material selected from the group consisting of titanium carbide, zirconium carbide and hafnium carbide, a surface part of said coating layer consists of silicon carbide and a composition in an intermediate part between the part contacting to the substrate and the surface part continuously or stepwise changes from at least one material selected-from the group consisting of titanium carbide, zirconium carbide and hafnium carbide to silicon carbide.

2. The coated carbon fiber-reinforced composite material according to claim 1, wherein said coating layer has a thickness of from 0.05 to 5 mm.

3. A carbon fiber-reinforced composite material comprising a matrix which comprises carbon and oxidation resistant ceramic and reinforcing carbon fiber contained in said matrix, wherein both surface parts of said matrix consists of the oxidation resistant ceramic, a center part of said matrix consists of carbon and a composition in each of intermediate parts between each surface and the center part continuously or stepwise changes from said oxidation resistant ceramic to carbon.

4. The carbon fiber-reinforced composite material according to claim 3, wherein said oxidation-resistant ceramic is at least one selected from the group consisting of carbides, nitrides and carbonitrides of the elements of the IVA group in the Periodic Table (e.g. titanium, zirconium and hafnium), boron and silicon.

5. The carbon fiber-reinforced composite material according to claim 4, wherein said oxidation-resistant ceramic is titanium carbide or zirconium nitride.

6. The carbon fiber-reinforced composite material according to claim 3, which has a coating layer of hafnium carbide.

7. The carbon fiber-reinforced composite material according to claim 3, which has a coating layer comprising hafnium carbide and silicone carbide and having a gradient composition such that a part of the coating layer contacting to the composite material consists of silicon carbide, a surface of the coating layer consists of hafnium carbide, and a composition in an intermediate part between the part contacting to the substrate and the surface continuously or stepwise changes from silicon carbide to hafnium carbide.

## Patentansprüche

1. Beschichtetes, mit Kohlenstoffasern verstärktes Verbundmaterial, das ein Substratmaterial umfaßt, das eine Kohlenstoffmatrix oder eine Keramikmatrix und verstärkende Kohlenstoffasern und eine Beschichtung umfaßt, die Siliciumcarbid und mindestens ein Material, das aus der Gruppe Titancarbid, Zirconiumcarbid und Hafniumcarbid ausgewählt ist, umfaßt, wobei ein Bereich der Beschichtung, der in Kontakt mit dem Substrat steht, aus mindestens einem Material, das aus der Gruppe Titancarbid, Zirconiumcarbid und Hafniumcarbid ausgewählt ist, besteht, ein Oberflächenbereich der Beschichtung aus Siliciumcarbid besteht und die Zusammensetzung in einem Zwischenbereich zwischen dem Bereich, der in Kontakt mit dem Substrat steht, und dem Oberflächenbereich sich kontinuierlich oder stufenweise von mindestens einem Material, das aus der Gruppe Titancarbid, Zirconiumcarbid und Hafniumcarbid ausgewählt ist, zu Siliciumcarbid ändert.

2. Beschichtetes, mit Kohlenstoffasern verstärktes Verbundmaterial nach Anspruch 1, wobei die Beschichtung eine Dicke von 0,05 bis 5 mm aufweist.

3. Mit Kohlenstoffasern verstärktes Verbundmaterial, das eine Matrix umfaßt, die Kohlenstoff und oxidationsbeständiges keramisches Material und verstärkende Kohlenstoffasern in der Matrix umfaßt, wobei beide Oberflächenbereiche der Matrix aus dem oxidationsbeständigen keramischen Material bestehen, ein zentraler Bereich der Matrix aus Kohlenstoff besteht und die Zusammensetzung in jedem der Zwischenbereiche zwischen jeder Oberfläche und dem zentralen Bereich sich kontinuierlich oder stufenweise von dem oxidationsbeständigen keramischen Material zu Kohlenstoff ändert.

4. Mit Kohlenstoffasern verstärktes Verbundmaterial nach Anspruch 3, wobei es sich bei dem oxidationsbeständigen keramischen Material mindestens um ein aus der Gruppe Carbide, Nitride und Carbonitride von Elementen der Gruppe IVA des Periodensystems der Elemente (z.B. Titan, Zirconium und Hafnium), Bor und Silicium ausgewähltes Material handelt.

5. Mit Kohlenstoffasern verstärktes Verbundmaterial nach Anspruch 4, wobei es sich bei dem oxidationsbeständigen keramischen Material um Titancarbid oder Zirconiumnitrid handelt.

6. Mit Kohlenstoffasern verstärktes Verbundmaterial nach Anspruch 3, das ein Beschichtung aus Hafniumcarbid aufweist.

7. Mit Kohlenstoffasern verstärktes Verbundmaterial nach Anspruch 3, das eine Beschichtung aufweist, die Hafniumcarbid und Siliciumcarbid umfaßt und einen Zusammensetzungsgradienten aufweist, so daß der Bereich der Beschichtung, der in Kontakt mit dem Verbundmaterial steht, aus Siliciumcarbid besteht, während die Oberfläche der Beschichtung aus Hafniumcarbid besteht und sich die Zusammensetzung in einem Zwischenbereich zwischen dem Bereich, der in Kontakt mit dem Substrat steht, und der Oberfläche kontinuierlich oder stufenweise von Siliciumcarbid zu Hafniumcarbid ändert.

## Revendications

1. Matériau composite revêtu et renforcé de fibres de carbone comprenant un matériau substrat qui comprend une matrice de carbone ou de céramique et des fibres de carbone de renforcement et une couche de revêtement qui comprend du carbure de silicium et au moins un matériau choisi dans le groupe formé du carbure de titane, du carbure de zirconium et du carbure d'hafnium; dans lequel une partie de ladite couche de revêtement en contact avec ledit substrat est constituée d'au moins un matériau choisi dans le groupe formé du carbure de titane, du carbure de zirconium et du carbure d'hafnium, une partie superficielle de ladite couche de revêtement est constituée de carbure de silicium et la composition dans une partie intermédiaire entre la partie en contact avec le substrat et la partie superficielle change continuellement ou graduellement d'au moins un matériau choisi dans le groupe formé du carbure de titane, du carbure de zirconium et du carbure d'hafnium en carbure de silicium.

2. Matériau composite revêtu et renforcé de fibres de carbone selon la revendication 1, dans lequel ladite couche de revêtement a une épaisseur de 0,05 à 5 mm.

3. Matériau composite renforcé de fibres de carbone comprenant une matrice qui comprend du carbone et une céramique résistant à l'oxydation et une fibre de carbone de renforcement contenue dans ladite matrice, dans lequel les deux parties superficielles de ladite matrice sont constituées de céramique résistant à l'oxydation, une partie centrale de ladite matrice est constituée de carbone et la composition dans chacune des parties intermédiaires entre chaque surface et la partie centrale change continuellement ou graduellement de ladite céramique résistant à l'oxydation en carbone.

4. Matériau composite revêtu et renforcé de fibres de carbone selon la revendication 3, dans lequel ladite céramique résistant à l'oxydation est au moins un matériau choisi dans le groupe constitué des carbures, des nitrures et des carbonitrures des éléments du groupe IVA dans le tableau périodique des éléments (par exemple, le titane, le zirconium et hafnium), du bore et du silicium.

5. Matériau composite renforcé de fibres de carbone selon la revendication 4, dans lequel ladite céramique résistant à l'oxydation est le carbure de titane ou le nitrure de zirconium.

6. Matériau composite renforcé de fibres de carbone selon la revendication 3, qui possède une couche de revêtement de carbure d'hafnium.

7. Matériau composite renforcé de fibres de carbone selon la revendication 3, qui possède une couche de revêtement comprenant du carbure d'hafnium et du carbure de silicium et ayant un gradient de composition tel qu'une partie de la couche de revêtement en contact avec le matériau composite est constituée de carbure de silicium, une surface de la couche de revêtement est constituée de carbure d'hafnium et la composition dans une partie intermédiaire entre la partie en contact avec le substrat et la surface change continuellement ou graduellement du carbure de silicium en carbure d'hafnium.

Fig. 1

Fig. 2

Fig. 3

Fig. 4